(19) Europäisches Patentamt
European Patent Office
Office européen des brevets

(11) EP 3 886 004 A1

(12) EUROPEAN PATENT APPLICATION

(43) Date of publication:
29.09.2021 Bulletin 2021/39

(51) Int Cl.:
G06N 20/20 (2019.01)

(21) Application number: 20193056.7

(22) Date of filing: 27.08.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.03.2020 CN 202010231207

(71) Applicant: Beijing Xiaomi Pinecone Electronics
Co., Ltd.
Beijing 100085 (CN)

(72) Inventors:
• TANG, Kexin
Beijing, 100085 (CN)
• QI, Baoyuan
Beijing, 100085 (CN)
• HAN, Jiacheng
Beijing, 100085 (CN)
• MENG, Erli
Beijing, 100085 (CN)

(74) Representative: Hughes, Andrea Michelle et al
Dehns Germany
Theresienstraße 6-8
80333 München (DE)

(54) **METHOD FOR TRAINING CLASSIFICATION MODEL, CLASSIFICATION METHOD AND DEVICE, AND STORAGE MEDIUM**

(57) A method for training classification model is provided. The method includes: an annotated data set is processed based on a pre-trained first model, to obtain, for each of annotated sample data in the annotated data set, N first class probabilities, each being a probability that the annotated sample data is classified as a respective one of N classes; for each of the annotated sample data, maximum K first class probabilities are selected from the N first class probabilities, and K first prediction labels, each corresponding to a respective one of K first class probabilities, are determined; and a second model is trained based on the annotated data set, a real label of each of the annotated sample data and the K first prediction labels of each of the annotated sample data. A classification method and device for training classification model are also provided.

Processing an annotated data set based on a pre-trained first model, to obtain, for each of annotated sample data in the annotated data set, N first class probabilities, each being a probability that the annotated sample data is classified as a respective one of N classes — 101

For each of the annotated sample data, selecting maximum K first class probabilities from the N first class probabilities, and determining K first prediction labels, each corresponding to a respective one of the K first class probabilities, wherein K and N are positive integers, and K is less than N — 102

Training a second model based on the annotated data set, a real label of each of the annotated sample data and the K first prediction labels of each of the annotated sample data — 103

**FIG. 1**

**Description**

**TECHNICAL FIELD**

The present invention relates to the technical field of mathematical models, and more particularly, to a method and device for training classification models, a classification method and device, and a storage medium.

**BACKGROUND**

Text classification refers to the classification of a document into one or more of N classes according to a task objective. At present, with the development of a neural network language model in the Natural Language Processing (NLP) field, more and more researchers choose to fine-tune a pre-trained language model to obtain a high-precision model. However, due to a complex coding structure of the pre-trained model, the fine-tuning and actual production of the model are often accompanied by huge time and space costs.

Knowledge distillation is a common method for compressing a deep learning model, which is intended to transfer the knowledge learned from the fusion of one large model or more models to another lightweight single model. In knowledge distillation known in the art, for massive label text classification, it is necessary to save a prediction label of each sample, which requires a lot of memory space. Moreover, in the actual calculation of a loss function, the calculation process is very slow due to too high latitudes of vectors.

**SUMMARY**

The present invention provides a method for training classification model, a classification method and device, and a storage medium.

According to a first aspect of the present invention, a method for training classification model is provided, which is applied to an electronic device, and includes:

   processing an annotated data set based on a pre-trained first model, to obtain, for each of annotated sample data in the annotated data set, N first class probabilities, each being a probability that the annotated sample data is classified as a respective one of N classes;
   selecting for each of the annotated sample data, maximum K first class probabilities from the N first class probabilities, and determining K first prediction labels, each corresponding to a respective one of the K first class probabilities, where K and N are positive integers, and K is less than N; and
   training a second model based on the annotated data set, a real label of each of the annotated sample data and the K first prediction labels of each of the annotated sample data.

In an embodiment, the method may further include:

   processing an unannotated data set based on the first model, to obtain, for each of unannotated sample data in the unannotated data set, M second class probabilities, each being a probability that the unannotated sample data is classified as a respective one of M classes;
   selecting for each of the unannotated sample data, maximum H second class probabilities from the M second class probabilities, and determining H second prediction labels, each corresponding to a respective one of the H second class probabilities, where M and H are positive integers, and H is less than M; and
   training the second model based on the annotated data set, the unannotated data set, the real label of each of the annotated sample data, the K first prediction labels of each of the annotated sample data, and the H second prediction labels of each of the unannotated sample data.

In an embodiment, the second model is trained based on the annotated data set, the unannotated data set, the real label of each of the annotated sample data, the K first prediction labels of each of the annotated sample data, and the H second prediction labels of each of the unannotated sample data, and this may include:

   inputting each of the annotated sample data in the annotated data set into the second model, and obtaining a third prediction label output by the second model;
   inputting each of the unannotated sample data in the unannotated data set into the second model, obtaining and a fourth prediction label output by the second model;
   determining a training loss of the second model by using a preset loss function, based on the real label, the K first prediction labels of each of the annotated sample data, the third prediction label, the H second prediction labels of each of the unannotated sample data, and the fourth prediction label; and
adjusting model parameters of the second model based on the training loss.

In an embodiment, the determination of the training loss of the second model based on the real label, the K first prediction labels of each of the annotated sample data, the third prediction label, the H second prediction labels of each of the unannotated sample data, and the fourth prediction label, may include:

determining a first loss of the second model on the annotated data set based on the real label and the third prediction label;
determining a second loss of the second model on the annotated data set based on the K first prediction labels of each of the annotated sample data and the third prediction label;
determining a third loss of the second model on the unannotated data set based on the H second prediction labels of each of the unannotated sample data and the fourth prediction label; and
determining the training loss based on a weighted sum of the first loss, the second loss and the third loss.

In an embodiment, the determination of training loss based on the weighted sum of the first loss, the second loss and the third loss, may include:

determining a first product of a first loss value and a first preset weight;
determining a loss weight according to the first preset weight, and determining a second product of a second loss value and the loss weight;
determining a third product of a third loss value and a second preset weight, the second preset weight being less than or equal to the first preset weight; and
summing the first product, the second product, and the third product to obtain the training loss.

In an embodiment, the method may further include:
stopping training the second model when a change in value of the training loss within a set duration is less than a set change threshold.
According to a second aspect of the present invention, a classification method is provided, which is applied to an electronic device, and includes:

inputting data to be classified into the second model which is obtained by using the method for training classification model provided in the first aspect to train, and outputting X class probabilities, each being a probability that the data to be classified is classified as a respective one of X classes;
according to the class probabilities from large to small, class labels corresponding to a preset number of class probabilities in a top rank of the X class probabilities; and
determining the preset number of class labels as class labels of the data to be classified.

According to a third aspect of the present invention, a device for training classification model is provided, which is applied to an electronic device, and includes:

a first determining module, configured to process an annotated data set based on a pre-trained first model, to obtain, for each of annotated sample data in the annotated data set, N first class probabilities, each being a probability that the annotated sample data is classified as a respective one of N classes;
a first selecting module, configured to, for each of the annotated sample data, select maximum K first class probabilities from the N first class probabilities, and determine K first prediction labels, each corresponding to a respective one of the K first class probabilities, here K and N are positive integers, and K is less than N; and
a first training module, configured to train the second model based on the annotated data set, a real label of each of the annotated sample data and the K first prediction labels of each of the annotated sample data.

In an embodiment, the device may further include:

a second determining module, configured to process an unannotated data set based on the first model, to obtain, for each of unannotated sample data in the unannotated data set, M second class probabilities, each being a probability that the unannotated sample data is classified as a respective one of M classes;
a second selecting module, configured to, for each of the unannotated sample data, select maximum H second class probabilities from the M second class probabilities, and determine H second prediction labels, each corresponding to a respective one of the H second class probabilities, here M and H are positive integers, and H is less than M; and

a second training module, configured to train the second model based on the annotated data set, the unannotated data set, the real label of each of the annotated sample data, the K first prediction labels of each of the annotated sample data, and the H second prediction labels of each of the unannotated sample data.

In an embodiment, the second training module may include:

a first determining submodule, configured to input each of the annotated sample data in the annotated data set into the second model, and obtain a third prediction label output by the second model;

a second determining submodule, configured to input each of the unannotated sample data in the unannotated data set into the second model, and obtain a fourth prediction label output by the second model;

a third determining submodule, configured to determine, by using a preset loss function, a training loss of the second model based on the real label, the K first prediction labels of each of the annotated sample data, the third prediction label, the H second prediction labels of each of the unannotated sample data, and the fourth prediction label; and

an adjusting submodule, configured to adjust model parameters of the second model based on the training loss.

In an embodiment, the third determining submodule is further configured to:

determine a first loss of the second model on the annotated data set based on the real label and the third prediction label;

determine a second loss of the second model on the annotated data set based on the K first prediction labels of each of the annotated sample data and the third prediction label;

determine a third loss of the second model on the unannotated data set based on the H second prediction labels of each of the unannotated sample data and the fourth prediction label; and

determine the training loss based on the weighted sum of the first loss, the second loss and the third loss.

In an embodiment, the third determining submodule is further configured to:

determine a first product of a first loss value and a first preset weight;

determine a loss weight according to the first preset weight, and determine a second product of a second loss value and the loss weight;

determine a third product of a third loss value and a second preset weight, the second preset weight being less than or equal to the first preset weight; and

add up the first product, the second product, and the third product to obtain the training loss.

In an embodiment, the device may further include:

a stopping module, configured to stop training the second model when a change in value of the training loss within a set duration is less than a set change threshold.

According to a fourth aspect of the present invention, a non-transitory computer-readable storage medium is provided, instructions stored in the storage medium, when executed by a processor of a device for training classification model, causes the device to perform steps of any of the methods for training classification model in the first aspect or the classification method in the second aspect.

The storage medium can be any entity or device capable of storing the instructions. For example, the support can include storage means such as a ROM, for example a CD ROM or a microelectronic circuit ROM, or magnetic storage means, for example a diskette (floppy disk) or a hard disk.

Alternatively, the storage medium can be an integrated circuit in which the instructions are incorporated, the circuit being adapted to execute the method in question or to be used in its execution.

The technical solutions provided in the embodiments of the present invention may have the following beneficial effects.

It can be seen from the above embodiments that the present invention may predict the annotated data in the annotated data set based on the first model and output the first class probability of each of annotated data and the first prediction label of each of annotated data, and then select K first class probabilities with the maximum probability and K first prediction labels corresponding to the K first class probabilities from all the first prediction labels output by the first model.

In the process of training the second model based on the first model, it is necessary to save the first prediction label output by the first model to a set storage space, and when the second model needs to be trained based on the first prediction label, the first prediction label is called from the set storage space, therefore, if the number of the first prediction labels stored is large, the memory resources of the set storage space may be wasted. In the embodiments of the present invention, by selecting K first prediction labels corresponding to the maximum K first class probabilities to train the second model, compared with training the second model directly based on all the first prediction labels output by the first model, in the first aspect, the memory space needed to store the first prediction label can be reduced; in the second aspect, as the amount of data is reduced, in the process of training, if it needs to calculate the training loss of the second model based on the first prediction label, the data calculation speed can be improved.

It is to be understood that the foregoing general descriptions and the following detailed descriptions are exemplary and explanatory only and not intended to limit the present invention.

## BRIEF DESCRIPTION OF THE DRAWINGS

The accompanying drawings, which are incorporated in and constitute a part of this specification, illustrate embodiments consistent with the present invention and, together with the description, serve to explain the principles of the present invention.

FIG. 1 is a flowchart of a method for training classification model according to an exemplary embodiment.
FIG. 2 is a flowchart of another method for training classification model according to an exemplary embodiment.
FIG. 3 is a block diagram of a device for training classification model according to an exemplary embodiment.
FIG. 4 is a block diagram of a device for training classification model according to an exemplary embodiment.
FIG. 5 is a block diagram of another device for training classification model according to an exemplary embodiment.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as defined by the appended claims.

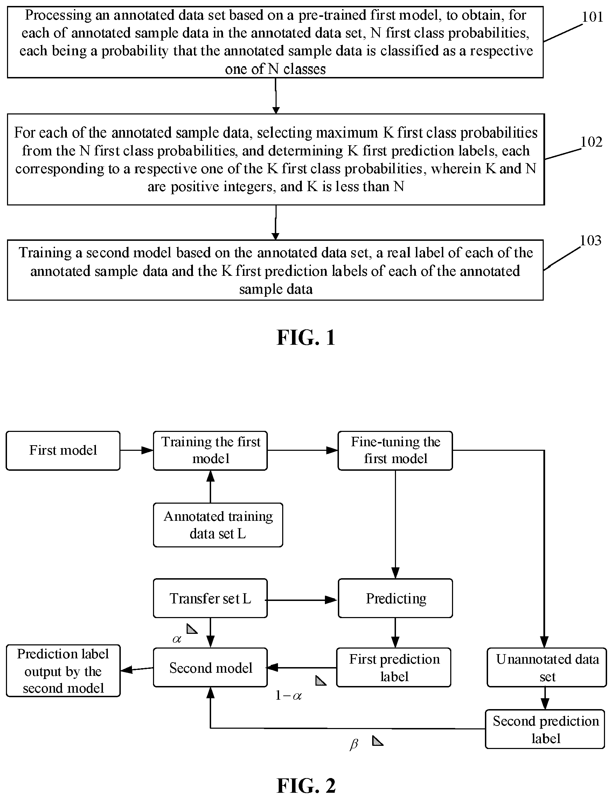

In the embodiments of the present invention, a method for training classification model is provided. FIG. 1 is a flowchart of a method for training classification model according to an exemplary embodiment. As shown in FIG. 1, the method is applied to an electronic device, and mainly includes the following steps:

In S101, an annotated data set is processed based on a pre-trained first model, to obtain, for each of annotated sample data in the annotated data set, N first class probabilities, each being a probability that the annotated sample data is classified as a respective one of N classes;

In S102, for each of the annotated sample data, maximum K first class probabilities are selected from the N first class probabilities, and K first prediction labels, each corresponding to a respective one of the K first class probabilities, are determined, where K and N are positive integers, and K is less than N;

In S103, a second model is trained based on the annotated data set, a real label of each of the annotated sample data and the K first prediction labels of each of the annotated sample data.

Here, the electronic device includes mobile terminals and fixed terminals, here the mobile terminals include: a mobile phone, a tablet PC, a laptop, etc.; the fixed terminals include: a PC. In other alternative embodiments, the method for training classification model may be also run on network side devices, here the network side devices include: a server, a processing center, etc.

The first model and the second model of the embodiments of the present invention may be mathematical models that perform predetermined functions, and include but are not limited to at least one of the following:

classification of an input text;
object segmentation of segmenting objects and backgrounds in an input image;
classification of objects in the input image;
object tracking based on the input image;
diagnostic aids based on a medical image; and
functions such as voice recognition, voice correction etc. based on input voice.

The above is only an illustration of examples of predefined functions performed by the first model and the second model, and the specific implementation is not limited to the above examples.

In other alternative embodiments, preset models can be trained based on an annotated training data set to obtain the first model, here the preset models include pre-trained models with high prediction accuracy but low data processing speed, for example, a Bert model, an Enhanced Representation from Knowledge Integration (Ernie) model, a Xlnet model, a neural network model, a fast text classification model, a support vector machine model, etc. The second model includes models with low prediction accuracy but high data processing speed, for example, an albert model, a tiny model, etc.

Taking that the first model is the Bert model as an example, the Bert model may be trained based on the training data set to obtain the trained object Bert model. In this case, the annotated data in the annotated data set may be input into the object Bert model, and N first class probabilities, each being a probability that the annotated sample data is classified as a respective one of N classes, are output based on the object Bert model. Here, the types of the first class probabilities may include: non-normalized class probability and normalized class probability, here the non-normalized class probability is a probability value that is not normalized by a normalized function (for example, a softmax function), and the normalized class probability is a probability value that is normalized by the normalized function. Because the non-normalized class probability contains more information than the normalized class probability, in the embodiments of the present invention, the non-normalized class probability may be output based on the first model; and in other alternative embodiments, the normalized class probability may be output based on the first model.

Taking a certain annotated sample data (first sample data) in the annotated data set as an example, after the first sample data is input into the first model, the N first class probabilities, each being a probability that the first sample data is classified as a respective one of N classes, may be output based on the first model. For example, the first class probability of the first sample data in the first class is 0.4, the first class probability of the first sample data in the second class is 0.001, the first class probability of the first sample data in the third class is 0.05, ..., and the first class probability of the first sample data in the N-th class is 0.35; in this way, the first class probability of the first sample data in each class can be determined, here the higher the first class probability, the more likely the first sample data belongs to this class, and the lower the first class probability, the less likely the first sample data belongs to this class. For example, if the first class probability of the first sample data in the first class is 0.4, and the first class probability of the first sample data in the second class is 0.001, it can be determined that the probability that the first sample data belongs to the first class is higher than the probability that the first sample data belongs to the second class.

After the N first class probabilities, each being a probability that the annotated sample data in the annotated data set is classified as a respective one of N classes, are obtained, the N first class probabilities may be sorted from large to small, and maximum K first class probabilities may be selected from the N first class probabilities according to the sorting result. Taking the first sample data in the annotated data set as an example again, the first class probability of the first sample data in the first class is 0.4, and the first class probability of the first sample data in the second class is 0.001, the first class probability of the first sample data in the third class is 0.05, ..., and the first class probability of the first sample data in the N-th class is 0.35; after the N first class probabilities corresponding to the first sample data are sorted from large to small, K first class probabilities in a top rank of the N first class probabilities may be taken. Taking that N is 3000 and K is 20 as an example, 3000 first class probabilities may be sorted from large to small, and the maximum 20 first class probabilities may be selected.

When the first class probability is less than a set probability threshold, the first sample data is less likely to belong to the class. In the embodiments of the present invention, the first class probability with higher value can be selected, and the first class probability with lower value can be discarded, which can reduce the amount of data on the basis of ensuring the accuracy of an output class probability, and then reduce the amount of calculation of the training model. After the maximum K first class probabilities are selected, K first prediction labels, each corresponding to a respective one of the maximum K first class probabilities, can be determined, and the second model is trained based on the annotated data set, a real label of each of annotated sample data and the K first prediction labels.

In the embodiments of the present invention, the annotated sample data in the annotated data set may be predicted based on the first model, and the first class probability of each of annotated sample data and the first prediction label of each of annotated sample data may be output, and then the K first class probabilities with the maximum probability and K first prediction labels, each corresponding to a respective one of the K first class probabilities, are selected from all the first prediction labels output by the first model.

In the process of training the second model based on the first model, it is required to save the first prediction label output by the first model to the set storage space, and when the second model needs to be trained based on the first prediction label, the first prediction label is called from the set storage space, therefore, if the number of the first prediction labels stored is large, the memory resources of the set storage space may be wasted. In the embodiments of the present invention, by selecting K first prediction labels, each corresponding to a respective one of the maximum K first class probabilities to train the second model, compared with training the second model directly based on all the first prediction labels output by the first model, in the first aspect, the memory space needed to store the first prediction label can be reduced; in the second aspect, as the amount of data is reduced, in the process of training, if it is necessary to calculate the training loss of the second model based on the first prediction label, the data calculation speed can be improved.

In other alternative embodiments, the method may further include:

an unannotated data set is processed based on the first model, to obtain, for each of unannotated sample data in the unannotated data set, M second class probabilities, each being a probability that the unannotated sample data is classified as a respective one of M classes;

for each of the unannotated sample data, maximum H second class probabilities are selected from the M second class probabilities, and H second prediction labels, each corresponding to a respective one of the H second class probabilities, are determined, where M and H are positive integers, and H is less than M; and

the second model is trained based on the annotated data set, the unannotated data set, the real label of each of the annotated sample data, the K first prediction labels of each of the annotated sample data, and the H second prediction labels of each of the unannotated sample data.

Here, the types of the second class probabilities may include: the non-normalized class probability and the normalized class probability. Because the normalized class probability can make the difference between classes more obvious compared with the non-normalized class probability, in the embodiments of the present invention, the normalized class probability may be output based on the first model; and in other alternative embodiments, the non-normalized class probability may be output based on the first model.

Taking a certain unannotated sample data (second sample data) in the unannotated data set as an example, after the second sample data is input into the first model, M second class probabilities, each being a probability that the second sample data is classified as a respective one of M classes, may be output based on the first model. For example, the second class probability of the second sample data in the first class is 0.01, the second class probability of the second sample data in the second class is 0.0001, the second class probability of the second sample data in the third class is 0.45, ..., and the second class probability of the second sample data in the N-th class is 0.35; in this way, the second class probability of the second sample data in each class can be determined, here the higher the second class probability, the more likely the second sample data belongs to this class, and the lower the second class probability, the less likely the second sample data belongs to this class. For example, if the second class probability of the second sample data in the third class is 0.45, and the second class probability of the second sample data in the second class is 0.0001, it can be determined that the probability that the second sample data belongs to the third class is higher than the probability that the second sample data belongs to the second class.

After the M second class probabilities, each being a probability that the unannotated sample data is classified as a respective one of M classes, are obtained, the M second class probabilities may be sorted from large to small, and the maximum H second class probabilities may be selected from the M second class probabilities according to the sorting result. Taking the second sample data in the unannotated data set as an example again, the second class probability of the second sample data in the first class is 0.01, and the second class probability of the second sample data in the second class is 0.0001, the second class probability of the second sample data in the third class is 0.45, ..., and the second class probability of the second sample data in the N-th class is 0.35; after the M second class probabilities corresponding to the second sample data are sorted from large to small, the first H second class probabilities may be taken. Taking that M is 300 and H is 1 as an example, 300 second class probabilities may be sorted from large to small, and the maximum second class probability is selected, and the second prediction label corresponding to the maximum second class probability may be determined as the label of the second sample data.

In the embodiments of the present invention, the unannotated sample data in the unannotated data set may be predicted based on the first model, and the second class probability of each of unannotated data and the second prediction label of each of unannotated data may be output, and then the H second class probabilities with the maximum probability and H second prediction labels, each corresponding to a respective one of the H second class probabilities, are selected from all the second prediction labels output by the first model. By adding the second prediction label of the unannotated sample data and training the second model based on the second prediction label, the training corpus of the second model is expanded, which can improve the diversity of data and the generalization ability of the trained second model.

In other alternative embodiments, the second model is trained based on the annotated data set, the unannotated data set, the real label of each of the annotated sample data, the K first prediction labels of each of the annotated sample data, and the H second prediction labels of each of the unannotated sample data, may include:

each of the annotated sample data in the annotated data set is input into the second model, and a third prediction label output by the second model is obtained;

each of the unannotated sample data in the unannotated data set is input into the second model, and a fourth prediction label output by the second model is obtained;

a training loss of the second model is determined by using a preset loss function, based on the real label, the K first prediction labels of each of the annotated sample data, the third prediction label, the H second prediction labels of each of the unannotated sample data, and the fourth prediction label; and

model parameters of the second model are adjusted based on the training loss.

Here, the preset loss function is used to judge the prediction of the second model. In the embodiments of the present invention, the third prediction label is obtained by inputting the annotated sample data into the second model to predict, the fourth prediction label is obtained by inputting the unannotated sample data into the second model, and the training loss of the second model is determined, by using the preset loss function, based on the real label, the K first prediction labels of each of annotated sample data, the third prediction label, the H second prediction label of each of unannotated sample data and the fourth prediction label, and then model parameters of the second model are adjusted by using the training loss obtained based on the preset loss function.

In the embodiments of the present invention, in the first aspect, compared with training the second model directly based on all the first prediction labels output by the first model, the memory space needed to store the first prediction label can be reduced; in the second aspect, because the amount of data is reduced, in the process of training, if it is necessary to calculate the training loss of the second model based on the first prediction label, the data calculation speed can be improved; in the third aspect, by adding the second prediction label of the unannotated sample data and training the second model based on the second prediction label, the training corpus of the second model is expanded, which can improve the diversity of data and the generalization ability of the trained second model; in the fourth aspect, a new preset loss function is also used for different loss calculation tasks; the performance of the second model can be improved by adjusting the model parameters of the second model based on the preset loss function.

In other alternative embodiments, the method may further include: the performance of the trained second model is evaluated based on a test data set, and an evaluation result is obtained, here the types of test data in the test data set include at least one of the following: text data type, image data type, service data type, and audio data type. Here, after the trained second model is obtained, its performance may be evaluated on the test data set, and the second model is gradually optimized until the optimal second model is found, for example, the second model with minimized verification loss or maximized reward. Here, the test data in the test data set can be input into the trained second model, and the evaluation result is output by the second model, and then, the output evaluation result is compared with a preset standard to obtain a comparison result, and the performance of the second model is evaluated according to the comparison result, here the test result can be the speed or accuracy of the second model processing the test data.

In other alternative embodiments, the training loss of the second model is determined based on the real label, the K first prediction labels of each of the annotated sample data, the third prediction label, the H second prediction labels of each of the unannotated sample data, and the fourth prediction label, may include:

a first loss of the second model on the annotated data set is determined based on the real label and the third prediction label;
a second loss of the second model on the annotated data set is determined based on the K first prediction labels of each of the annotated sample data and the third prediction label;
a third loss of the second model on the unannotated data set is determined based on the H second prediction labels of each of the unannotated sample data and the fourth prediction label; and
the training loss is determined based on the weighted sum of the first loss, the second loss and the third loss.

Here, the first loss is a cross entropy of the real label and the third prediction label. A formula for calculating the first loss includes:

$$loss^{(hard)} = -\sum_{i \in N} y_i' \log(y_i) \qquad (1)$$

in the formula (1), $loss^{(hard)}$ denotes the first loss, $N$ denotes the size of the annotated data set, $y_i'$ denotes the real label of the i-th dimension, $y_i$ denotes the third prediction label of the i-th dimension; i is a positive integer. A formula for calculating $y_i$ includes:

$$y_i = -\frac{e^{Z_i}}{\sum_j e^{Z_j}} \qquad (2)$$

in the formula (2), $y_i$ denotes the third prediction label of the i-th dimension, $Z_i$ denotes the first class probability of the annotated data of the i-th dimension, $Z_j$ denotes the first class probability of the annotated data of the j-th dimension; both i and j are positive integers.

The second loss is a cross entropy of K first prediction labels and the third prediction label of each of the annotated sample data. A formula for calculating the second loss includes:

$$loss^{(soft)} = -\frac{1}{T}\sum_{i\in ST_1}\hat{y}_i' \log(y_i) \qquad (3)$$

in the formula (3), $loss^{(soft)}$ denotes the second loss, $\hat{y}_i'$ denotes the first prediction label of the i-th dimension, $y_i$ denotes the third prediction label of the i-th dimension, T denotes a preset temperature parameter, $ST_1$ denotes the number of the first prediction labels, which may be equal to K; i is an positive integer. Here, the more class information contained, the flatter a prediction value. A formula for calculating $y_i$ includes:

$$y_i = -\frac{e^{Z_i/T}}{\sum_j(e^{Z_j/T})} \qquad (4)$$

in the formula (4), $y_i$ denotes the third prediction label of the i-th dimension, $Z_i$ denotes the first class probability of the annotated data of the i-th dimension, $Z_j$ denotes the first class probability of the annotated data of the j-th dimension, and T denotes the preset temperature parameter; both i and j are positive integers. Here, the larger the value of the preset temperature parameter, the flatter the output probability distribution, and the more classification information contained in the output result. By setting the preset temperature parameter, the flatness of the output probability distribution can be adjusted based on the preset temperature parameter, and then the classification information contained in the output result can be adjusted, which can improve the accuracy and flexibility of model training.

The third loss is a cross entropy of the second prediction label and the fourth prediction label. A formula for calculating the third loss includes:

$$loss^{(hard_2)} = -\sum_{i\in M}y_i'' \log(y_i) \qquad (5)$$

in the formula (5), $loss^{(hard2)}$ denotes the third loss, $y_i''$ denotes the second prediction label of the i-th dimension, $y_i$ denotes the fourth prediction label of the i-th dimension, and M denotes the size of the unannotated data set; i is a positive integer. In the embodiments of the present invention, the performance of the second model can be improved by using a new preset loss function for different loss calculation tasks, and adjusting the model parameters of the second model based on the preset loss function.

In other alternative embodiments, the training loss is determined based on the weighted sum of the first loss, the second loss and the third loss, may include:

a first product of a first loss value and a first preset weight is determined;
a loss weight is determined according to the first preset weight, and a second product of a second loss value and the loss weight is determined;
a third product of a third loss value and a second preset weight is determined, the second preset weight being less than or equal to the first preset weight; and
the first product, the second product, and the third product are added up to obtain the training loss.

In other alternative embodiments, a formula for calculating the training loss includes:

$$Loss = \alpha * loss^{(hard)} + (1-\alpha) * loss^{(soft)} + \beta * loss^{(hard_2)} \qquad (6)$$

in the formula (6), $Loss$ denotes the training loss of the second model, $loss^{(hard)}$ denotes the first loss, $loss^{(soft)}$ denotes the second loss, $loss^{(hard2)}$ denotes the third loss, $\alpha$ denotes the first preset weight which is greater than 0.5 and less

than 1, and $\beta$ denotes the second preset weight which is less than or equal to $\alpha$. In the embodiments of the present invention, on the one hand, the performance of the second model can be improved by using a new preset loss function for different loss calculation tasks, and adjusting the model parameter of the second model based on the preset loss function; on the other hand, by setting the adjustable first preset weight and second preset weight, the proportion of the first loss, the second loss and the third loss in the training loss can be adjusted according to needs, thus improving the flexibility of model training.

In other alternative embodiments, the method may further include:

training the second model is stopped when a change in value of the training loss within a set duration is less than a set change threshold. In other alternative embodiments, the accuracy of the second model may also be verified based on a set verification set. When the accuracy reaches a set accuracy, training the second model is stopped to obtain a trained object model.

FIG. 2 is a flowchart of another method for training classification model according to an exemplary embodiment. As shown in FIG. 2, in the process of training the second model (Student model) based on the first model (Teacher model), the first model may be determined in advance and fine-tuned on the annotated training data set L, and the fine-tuned first model is saved; here, the fine-tuned first model may be marked as TM. Here, the first model may be a pre-trained model with high prediction accuracy but low calculation speed, for example, the Bert model, the Ernie model, the Xlnet model etc.

After TM is obtained, TM may be used to predict the annotated data set (transfer set T), N first class probabilities, each being a probability that annotated sample data in the annotated data set is classified as a respective one of N classes, are obtained, and for each of the annotated sample data, maximum K first class probabilities are selected from N first class probabilities, and K first prediction labels, each corresponding to a respective one of the maximum K first class probabilities are determined; where K is a hyper-parameter, for example, K may be equal to 20.

In the embodiments of the present invention, the TM may also be used to predict the unannotated data set U, M second class probabilities, each being a probability that unannotated sample data in the unannotated data set is classified as a respective one of M classes, are obtained, and for each of the unannotated sample data, maximum H second class probabilities are selected from M second class probabilities, and H second prediction labels, each corresponding to a respective one of the maximum H second class probabilities, are determined; here H may be equal to 1. Here, when the second class probability is the non-normalized class probability, the second class probability may be normalized using an activation function softmax. In this way, the data needed to train the second model can be determined.

In the embodiments of the present invention, each of annotated sample data in the annotated data set may be input into the second model, and the third prediction label output by the second model is obtained; each of unannotated sample data in the unannotated data set is input into the second model, and the fourth prediction label output by the second model is obtained; the training loss of the second model is determined, by using a preset loss function, based on the real label, the K first prediction labels of each of annotated sample data, the third prediction label, the H second prediction label of each of unannotated sample data and the fourth prediction label; and the model parameters of the second model are adjusted based on the training loss.

In the embodiments of the present invention, in the first aspect, the second model is trained by selecting the maximum K first prediction labels output by the first model instead of selecting all the first prediction labels in traditional model distillation, which reduces the memory consumption and improves the training speed of the second model without affecting the performance of the second model; in the second aspect, by making full use of the unannotated data set and introducing the unannotated data in the process of data distillation, the training corpus of the second model is expanded, which can improve the diversity of data and improve the generalization ability of the trained second model; in the third aspect, the performance of the second model can be improved by using a new preset loss function for joint tasks and adjusting the model parameters of the second model based on the preset loss function.

The embodiments of the present invention further provide a classification method, which may use the trained second model to class the data to be classified, and may include the following steps.

In S1, the data to be classified is input into the second model which is obtained by using any of the above methods for training classification model to train, and X class probabilities, each being a probability that the data to be classified is classified as a respective one of X classes, are output. X is a natural number.

In S2, according to the class probabilities from large to small, class labels corresponding to a preset number of class probabilities in a top rank of the X class probabilities are determined.

In S3, the preset number of class labels is determined as class labels of the data to be classified.

The number (that is, the preset number) of class labels of the data to be classified may be determined according to actual needs, the number (that is, the preset number) may be one or more. When the preset number is one, the class label with the highest class probability may be taken as the label of the data to be classified. When the preset number is multiple, the first multiple class probabilities may be determined according to the order of class probabilities from large to small, and the class labels corresponding to the multiple class probabilities are determined as the class labels of the data to be classified.

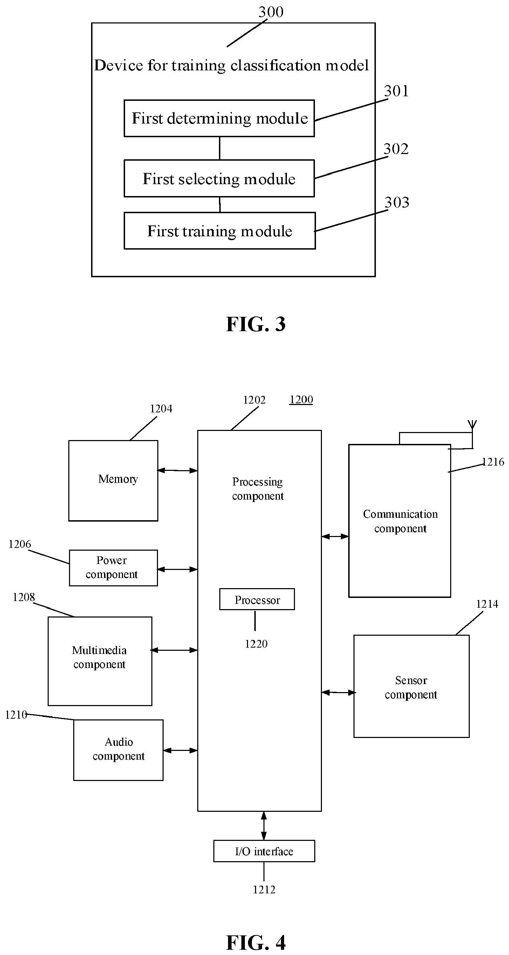

FIG. 3 is a block diagram of a device for training classification model according to an exemplary embodiment. As shown in FIG. 3, the device 300 for training classification model is applied to an electronic device, and mainly includes:

a first determining module 301, configured to process an annotated data set based on a pre-trained first model, to obtain, for each of annotated sample data in the annotated data set, N first class probabilities, each being a probability that the annotated sample data is classified as a respective one of N classes;
a first selecting module 302, configured to for each of the annotated sample data, select maximum K first class probabilities from the N first class probabilities, and determine K first prediction labels, each corresponding to a respective one of the K first class probabilities, where K and N are positive integers, and K is less than N; and
a first training module 303, configured to train the second model based on the annotated data set, a real label of each of the annotated sample data and the K first prediction labels of each of the annotated sample data.

In other alternative embodiments, the device 300 may further include:

a second determining module, configured to process an unannotated data set based on the first model, to obtain, for each of unannotated sample data in the unannotated data set, M second class probabilities, each being a probability that the unannotated sample data is classified as a respective one of M classes;
a second selecting module, configured to for each of the unannotated sample data, select maximum H second class probabilities from the M second class probabilities, and determine H second prediction labels, each corresponding to a respective one of the H second class probabilities, where M and H are positive integers, and H is less than M; and
a second training module, configured to train the second model based on the annotated data set, the unannotated data set, the real label of each of the annotated sample data, the K first prediction labels of each of the annotated sample data, and the H second prediction labels of each of the unannotated sample data.

In other alternative embodiments, the second training module may include:

a first determining submodule, configured to input each of the annotated sample data in the annotated data set into the second model, and obtain a third prediction label output by the second model;
a second determining submodule, configured to input each of the unannotated sample data in the unannotated data set into the second model, and obtain a fourth prediction label output by the second model;
a third determining submodule, configured to determine, by using a preset loss function, a training loss of the second model based on the real label, the K first prediction labels of each of the annotated sample data, the third prediction label, the H second prediction labels of each of the unannotated sample data, and the fourth prediction label; and
an adjusting submodule, configured to adjust model parameters of the second model based on the training loss.

In other alternative embodiments, the third determining submodule is further configured to:

determine a first loss of the second model on the annotated data set based on the real label and the third prediction label;
determine a second loss of the second model on the annotated data set based on the K first prediction labels of each of the annotated sample data and the third prediction label;
determine a third loss of the second model on the unannotated data set based on the H second prediction labels of each of the unannotated sample data and the fourth prediction label; and
determine the training loss based on the weighted sum of the first loss, the second loss and the third loss.

In other alternative embodiments, the third determining submodule is further configured to:

determine a first product of a first loss value and a first preset weight;
determine a loss weight according to the first preset weight, and determine a second product of a second loss value and the loss weight;
determine a third product of a third loss value and a second preset weight, the second preset weight being less than or equal to the first preset weight; and
add up the first product, the second product, and the third product to obtain the training loss.

In other alternative embodiments, the device 300 may further include:
a stopping module, configured to stop training the second model when a change in value of the training loss within a set duration is less than a set change threshold.
The embodiments of the present invention further provide a classification device, which is applied to an electronic device, and may include:

a classification module, configured to input data to be classified into a second model which is obtained by using the method for training classification model provided by any of the above embodiments to train, and output X class probabilities, each being a probability that the data to be classified is classified as a respective one of X classes; a label determining module, configured to determine, according to the class probabilities from large to small, class labels corresponding to a preset number of class probabilities in a top rank of the X class probabilities; and a class determining module, configured to determine the preset number of class labels as class labels of the data to be classified.

With respect to the devices in the above embodiments, the specific manners for performing operations for individual modules have been described in detail in the embodiments of the method, so it will not be elaborated here.

FIG. 4 is a block diagram of a device 1200 for training classification model or a classification device 1200 according to an exemplary embodiment. For example, the device 1200 may be a mobile phone, a computer, a digital broadcast terminal, a messaging device, a gaming console, a tablet, a medical device, exercise equipment, a personal digital assistant, and the like.

Referring to FIG. 4, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above method. Moreover, the processing component 1202 may include one or more modules which facilitate interaction between the processing component 1202 and other components. For instance, the processing component 1202 may include a multimedia module to facilitate interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 1206 provides power for various components of the device 1200. The power component 1206 may include a power management system, one or more power supplies, and other components associated with generation, management and distribution of power for the device 1200.

The multimedia component 1208 includes a screen providing an output interface between the device 1200 and a user. In some embodiments, the screen may include a Liquid Crystal Display (LCD) and a touch panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 1208 includes a front camera and/or a rear camera. The front camera and/or the rear camera may receive external multimedia data when the device 1200 is in an operation mode, such as a photographing mode or a video mode. Each of the front camera and the rear camera may be a fixed optical lens system or have focusing and optical zooming capabilities.

The audio component 1210 is configured to output and/or input an audio signal. For example, the audio component 1210 includes a Microphone (MIC), and the MIC is configured to receive an external audio signal when the device 1200 is in the operation mode, such as a call mode, a recording mode and a voice recognition mode. The received audio signal may further be stored in the memory 1204 or sent through the communication component 1216. In some embodiments, the audio component 1210 further includes a speaker configured to output the audio signal.

The I/O interface 1212 provides an interface between the processing component 1202 and a peripheral interface module, and the peripheral interface module may be a keyboard, a click wheel, a button and the like. The buttons may include, but are not limited to: a home button, a volume button, a starting button and a locking button.

The sensor component 1214 includes one or more sensors configured to provide status assessment of various aspects for the device 1200. For instance, the sensor component 1214 may detect an on/off status of the device 1200 and relative positioning of components, such as a display and a keypad of the device 1200, and the sensor component 1214 may further detect a change in a position of the device 1200 or a component of the device 1200, presence or absence of user contact with the device 1200, orientation or acceleration/deceleration of the device 1200 and a change in temperature of the device 1200. The sensor component 1214 may include a proximity sensor configured to detect presence of an object nearby without any physical contact. The sensor component 1214 may further include a light sensor, such as a Complementary Metal Oxide Semiconductor (CMOS) or Charge Coupled Device (CCD) image sensor, configured for use in an imaging application. In some embodiments, the sensor component 1214 may further include an acceleration sensor, a gyroscope sensor, a magnetic sensor, a pressure sensor or a temperature sensor.

The communication component 1216 is configured to facilitate wired or wireless communication between the device 1200 and other devices. The device 1200 may access a communication-standard-based wireless network, such as a Wireless Fidelity (WiFi) network, a 2nd-Generation (2G) or 3rd-Generation (3G) network or a combination thereof. In an exemplary embodiment, the communication component 1216 receives a broadcast signal or broadcast-associated information from an external broadcast management system through a broadcast channel. In an exemplary embodiment, the communication component 1216 further includes a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology and other technologies.

In an exemplary embodiment, the device 1200 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the above method.

In an exemplary embodiment, there is further provided a non-transitory computer-readable storage medium including instructions, such as the memory 1204 including instructions, and the instructions may be executed by the processor 1220 of the device 1200 to implement the above-described methods. For example, the non-transitory computer-readable storage medium may be a Read-Only Memory (ROM), a Random Access Memory (RAM), a Compact Disc Read-Only Memory (CD-ROM), a magnetic tape, a floppy disc, an optical data storage device and the like.

A non-transitory computer-readable storage medium is provided, instructions stored in the storage medium, when executed by a processor of a mobile terminal, causes the mobile terminal to execute a method for training classification model. The method may include:

an annotated data set is processed based on a pre-trained first model, to obtain, for each of annotated sample data in the annotated data, N first class probabilities, each being a probability that the annotated sample data is classified as a respective one of N classes;

for each of the annotated sample data, maximum K first class probabilities are selected from the N first class probabilities, and K first prediction labels, each corresponding to a respective one of the K first class probabilities, are determined, here K and N are positive integers, and K is less than N; and

a second model is trained based on the annotated data set, a real label of each of the annotated sample data and the K first prediction labels of each of the annotated sample data.

Or, the instruction causes the mobile terminal to execute a classification method. The method may include:

data to be classified is input into the second model which is obtained by using the method for training classification model provided by any of the above embodiments to train, and X class probabilities, each being a probability that the data to be classified is classified as a respective one of X classes, are output;

according to the class probabilities from large to small, class labels corresponding to a preset number of class probabilities in a top rank of the X class probabilities are determined; and

the preset number of class labels is determined as class labels of the data to be classified.

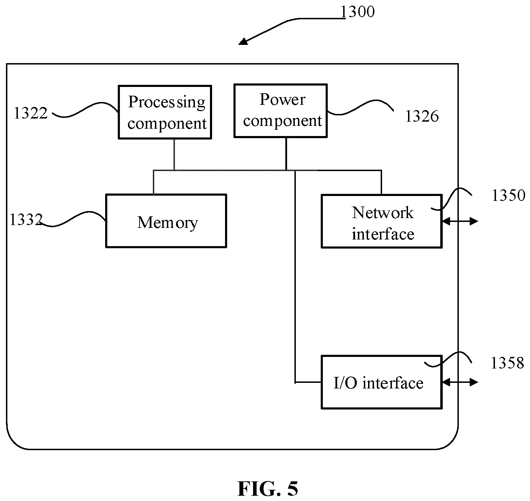

FIG. 5 is a block diagram of another device 1300 for training classification model or a classification device 1300 according to an exemplary embodiment. For example, the device 1300 may be provided as a server. Referring to FIG. 5, the device 1300 includes a processing component 1322 further including one or more processors, and a memory resource represented by a memory 1332 configured to store instructions executable by the processing component 1322, for example, an application (APP). The APP stored in the memory 1332 may include one or more modules of which each corresponds to a set of instructions. Moreover, the processing component 1322 is configured to execute instructions, so as to execute the above method for training classification model. The method may include:

an annotated data set is processed based on a pre-trained first model, to obtain, for each of annotated sample data in the annotated data set, N first class probabilities, each being a probability that the annotated sample data is classified as a respective one of N classes;

for each of the annotated sample data, maximum K first class probabilities are selected from the N first class probabilities, and K first prediction labels, each corresponding to a respective one of the K first class probabilities, are determined, here K and N are positive integers, and K is less than N; and
a second model is trained based on the annotated data set, a real label of each of the annotated sample data and the K first prediction labels of each of the annotated sample data.

Alternatively, the processing component 1322 is configured to execute the above classification method. The method may include:

data to be classified is input into the second model which is obtained by using the method for training classification model provided by any of the above embodiments to train, and X class probabilities, each being a probability that the data to be classified is classified as a respective one of X classes, are output;
according to the class probabilities from large to small, class labels corresponding to a preset number of class probabilities in a top rank of the X class probabilities are determined; and
the preset number of class labels is determined as class labels of the data to be classified.

The device 1300 may further include a power component 1326 configured to execute power management of the device 1300, a wired or wireless network interface 1350 configured to connect the device 1300 to a network and an I/O interface 1358. The device 1300 may be operated based on an operating system stored in the memory 1332, for example, Windows Server™, Max OS X™, Unix™, Linux™, FreeBSD™ or the like.

Other implementation solutions of the present invention will be apparent to those skilled in the art from consideration of the specification and practice of the present invention. This present application is intended to cover any variations, uses, or adaptations of the present invention following the general principles thereof and including such departures from the present invention as come within known or customary practice in the art. It is intended that the specification and examples be considered as exemplary only, with the scope of the present invention being defined by the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the appended claims.

## Claims

1. A method for training classification model, the method being applied to an electronic device, and comprising:

    processing (S101) an annotated data set based on a pre-trained first model, to obtain, for each of annotated sample data in the annotated data set, N first class probabilities, each being a probability that the annotated sample data is classified as a respective one of N classes;
    for each of the annotated sample data, selecting (S1*02) maximum K first class probabilities from the N first class probabilities, and determining K first prediction labels, each corresponding to a respective one of the K first class probabilities, wherein K and N are positive integers, and K is less than N; and
    training (S103) a second model based on the annotated data set, a real label of each of the annotated sample data and the K first prediction labels of each of the annotated sample data.

2. The method of claim 1, further comprising:

    processing an unannotated data set based on the first model, to obtain, for each of unannotated sample data in the unannotated data set, M second class probabilities, each being a probability that the unannotated sample data is classified as a respective one of M classes;
    for each of the unannotated sample data, selecting maximum H second class probabilities from the M second class probabilities, and determining H second prediction labels, each corresponding to a respective one of the H second class probabilities, wherein M and H are positive integers, and H is less than M; and
    training the second model based on the annotated data set, the unannotated data set, the real label of each of the annotated sample data, the K first prediction labels of each of the annotated sample data, and the H second prediction labels of each of the unannotated sample data.

3. The method of claim 2, wherein training the second model based on the annotated data set, the unannotated data set, the real label of each of the annotated sample data, the K first prediction labels of each of the annotated sample data, and the H second prediction labels of each of the unannotated sample data comprises:

inputting each of the annotated sample data in the annotated data set into the second model, and obtaining a third prediction label output by the second model;

inputting each of the unannotated sample data in the unannotated data set into the second model, and obtaining a fourth prediction label output by the second model;

determining, by using a preset loss function, a training loss of the second model based on the real label, the K first prediction labels of each of the annotated sample data, the third prediction label, the H second prediction labels of each of the unannotated sample data, and the fourth prediction label; and

adjusting model parameters of the second model based on the training loss.

4. The method of claim 3, wherein determining the training loss of the second model based on the real label, the K first prediction labels of each of the annotated sample data, the third prediction label, the H second prediction labels of each of the unannotated sample data, and the fourth prediction label comprises:

determining a first loss of the second model on the annotated data set based on the real label and the third prediction label;

determining a second loss of the second model on the annotated data set based on the K first prediction labels of each of the annotated sample data and the third prediction label;

determining a third loss of the second model on the unannotated data set based on the H second prediction labels of each of the unannotated sample data and the fourth prediction label; and

determining the training loss based on a weighted sum of the first loss, the second loss and the third loss.

5. The method of claim 4, wherein determining the training loss based on the weighted sum of the first loss, the second loss and the third loss comprises:

determining a first product of a first loss value and a first preset weight;

determining a loss weight according to the first preset weight, and determining a second product of a second loss value and the loss weight;

determining a third product of a third loss value and a second preset weight, wherein the second preset weight is less than or equal to the first preset weight; and

adding up the first product, the second product, and the third product to obtain the training loss.

6. The method of any one of claims 3 to 5, further comprising:
stopping training the second model when a change in value of the training loss within a set duration is less than a set change threshold.

7. A classification method, the method being applied to an electronic device, and comprising:

inputting data to be classified into a second model which is obtained by using the method for training classification model of any one of claims 1 to 6 to train, and outputting X class probabilities, each being a probability that the data to be classified is classified as a respective one of X classes;

determining, according to the class probabilities from large to small, class labels corresponding to a preset number of class probabilities in a top rank of the X class probabilities; and

determining the preset number of class labels as the class labels of the data to be classified.

8. A device for training classification model, the device being applied to an electronic device, and comprising:

a first determining module (301), configured to process an annotated data set based on a pre-trained first model, to obtain, for each of annotated sample data in the annotated data set, N first class probabilities, each being a probability that the annotated sample data is classified as a respective one of N classes;

a first selecting module (302), configured to for each of the annotated sample data, select maximum K first class probabilities from the N first class probabilities, and determine K first prediction labels, each corresponding to a respective one of the K first class probabilities, wherein K and N are positive integers, and K is less than N; and

a first training module (303), configured to train a second model based on the annotated data set, a real label of each of the annotated sample data and the K first prediction labels of each of the annotated sample data.

9. The device of claim 8, further comprising:

a second determining module, configured to process an unannotated data set based on the first model, to obtain, for each of unannotated sample data in the unannotated data set, M second class probabilities, each being a probability that the unannotated sample data is classified as a respective one of M classes;
a second selecting module, configured to for each of the unannotated sample data, select maximum H second class probabilities from the M second class probabilities, and determine H second prediction labels, each corresponding to a respective one of the H second class probabilities, wherein M and H are positive integers, and H is less than M; and
a second training module, configured to train the second model based on the annotated data set, the unannotated data set, the real label of each of the annotated sample data, the K first prediction labels of each of the annotated sample data, and the H second prediction labels of each of the unannotated sample data.

10. The device of claim 9, wherein the second training module comprises:

a first determining submodule, configured to input each of the annotated sample data in the annotated data set into the second model, and obtain a third prediction label output by the second model;
a second determining submodule, configured to input each of the unannotated sample data in the unannotated data set into the second model, and obtain a fourth prediction label output by the second model;
a third determining submodule, configured to determine, by using a preset loss function, a training loss of the second model based on the real label, the K first prediction labels of each of the annotated sample data, the third prediction label, the H second prediction labels of each of the unannotated sample data, and the fourth prediction label; and
an adjusting submodule, configured to adjust model parameters of the second model based on the training loss.

11. The device of claim 10, wherein the third determining submodule is further configured to:

determine a first loss of the second model on the annotated data set based on the real label and the third prediction label;
determine a second loss of the second model on the annotated data set based on the K first prediction labels of each of the annotated sample data and the third prediction label;
determine a third loss of the second model on the unannotated data set based on the H second prediction labels of each of the unannotated sample data and the fourth prediction label; and
determine the training loss based on a weighted sum of the first loss, the second loss and the third loss.

12. The device of claim 11, wherein the third determining submodule is further configured to:

determine a first product of a first loss value and a first preset weight;
determine a loss weight according to the first preset weight, and determining a second product of a second loss value and the loss weight;
determine a third product of a third loss value and a second preset weight, wherein the second preset weight is less than or equal to the first preset weight; and
add up the first product, the second product, and the third product to obtain the training loss.

13. The device of any one of claims 10 to 12, further comprising:
a stopping module, configured to stop training the second model when a change in value of the training loss within a set duration is less than a set change threshold.

14. A non-transitory computer-readable storage medium, having stored therein instructions that, when executed by a processor of a device for training classification model, causes the device to perform steps of the method for training classification model of any one of claims 1 to 6 or the classification method of claim 7.

Processing an annotated data set based on a pre-trained first model, to obtain, for each of annotated sample data in the annotated data set, N first class probabilities, each being a probability that the annotated sample data is classified as a respective one of N classes — 101

For each of the annotated sample data, selecting maximum K first class probabilities from the N first class probabilities, and determining K first prediction labels, each corresponding to a respective one of the K first class probabilities, wherein K and N are positive integers, and K is less than N — 102

Training a second model based on the annotated data set, a real label of each of the annotated sample data and the K first prediction labels of each of the annotated sample data — 103

**FIG. 1**

First model → Training the first model → Fine-tuning the first model

Annotated training data set L → Training the first model

Transfer set L → Predicting

Predicting → First prediction label

Fine-tuning the first model → Unannotated data set

Unannotated data set → Second prediction label

Transfer set L $\alpha$ → Second model

First prediction label $1-\alpha$ → Second model

Second prediction label $\beta$ → Second model

Second model → Prediction label output by the second model

**FIG. 2**

300

Device for training classification model

First determining module — 301

First selecting module — 302

First training module — 303

**FIG. 3**

**FIG. 4**

**FIG. 5**

Europäisches
Patentamt

European
Patent Office

Office européen
des brevets

# EUROPEAN SEARCH REPORT

**Application Number**

EP 20 19 3056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZEKI YALNIZ I ET AL: "Billion-scale semi-supervised learning for image classification", ARXIV.ORG, CORNELL UNIVERSITY LIBRARY, 201 OLIN LIBRARY CORNELL UNIVERSITY ITHACA, NY 14853, 2 May 2019 (2019-05-02), XP081271363, * sections 3 and 4 * | 1-14 | INV. G06N20/20 |

TECHNICAL FIELDS
SEARCHED (IPC)

G06N

The present search report has been drawn up for all claims

| Place of search | Date of completion of the search | Examiner |
|---|---|---|
| The Hague | 5 March 2021 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)